# EUROPEAN PATENT SPECIFICATION

(11) **EP 2 565 234 B1**
(45) Date of publication and mention of the grant of the patent: **02.09.2020**
(21) Application number: 11775135.4
(22) Date of filing: 28.04.2011
(51) Int. Cl.: C08L 77/06, C08G 69/26, C08K 5/00, C10M 105/68, C10M 107/44, C10M 137/02, C10N 30/00, C10N 30/06, C10N 30/08, C10N 40/36, C10N 50/08

(54) **RESIN COMPRISING A WAX AND METHOD FOR PRODUCING SAME**
HARZ ENTHALTEND EIN WACHS UND VERFAHREN ZU SEINER HERSTELLUNG
RÉSINE CONTENANT UN CIRE ET SON PROCÉDÉ DE PRODUCTION

(30) Priority: 30.04.2010 JP 2010104742
(43) Date of publication of application: 06.03.2013
(73) Proprietor: Kyoeisha Chemical Co., Ltd., Osaka-shi, Osaka 541-0054 (JP)
(72) Inventor: YAMANISHI, Yoshihiko, Nara-shi Nara 630-8453 (JP); KINUGAWA, Masashi, Nara-shi Nara 630-8453 (JP); MATSUYAMA, Takanori, Nara-shi Nara 630-8453 (JP); NAKATSUKA, Nobuaki, Nara-shi Nara 630-8453 (JP)
(74) Representative: dompatent von Kreisler Selting Werner - Partnerschaft von Patent- und Rechtsanwälten mbB
(86) International application number: PCT/JP2011/060422
(87) International publication number: WO 2011/136354

(56) References cited:
- EP-A1- 1 464 664
- JP-A- 1 103 654
- JP-A- 6 145 498
- JP-A- 6 145 505
- JP-A- 6 145 686
- JP-A- 2003 313 321
- JP-A- 2004 307 817
- JP-A- 2009 126 880

## Description

The present invention relates to wax used for reducing a melt viscosity of a thermoplastic resin, for enhancing molding processability, and for improving mold releasability from molds at the time of die molding, etc., and to a method for producing such wax. The present invention also relates to a lubricant and a mold release agent for thermoplastic resin molding processes.

Thermoplastic resins are plastics that are molded after they are heat-melted, and are widely used to produce molded articles in various fields. Conventionally, polyethylene, polystyrene, etc., a thermoplastic resin which can be heat-melted at comparatively low temperatures have been used so far. Engineering plastics or super engineering plastics such as polycarbonates, polyamides, polyesters, polyacetals, polyphenylene ethers, liquid polymers, polyphenylene sulfides, etc.; reinforcing filler-containing reinforced plastics; plastic alloys, etc. have been used recently. These resins can be heat-melted at comparatively high temperature and can be used as alternatives for metals in a wide range of areas recently.

Thermoplastic resins can be molded according to individual needs using forming process such as press molding, vacuum molding, extrusion molding (sheet or film etc.), injection molding, blow molding, etc. Thermoplastic resins have high melting viscosity, accordingly have poor molding processability. So lubricants such as low molecular weight polyethylene waxes, higher fatty acids such as stearic acid, etc., metal salts of such higher fatty acids, higher fatty acid esters, higher fatty acid amides, are added to the resins and then molded.

However, if these substances are singly used as lubricating agents, there occur some problems, such as a low melting point, poor heat resistance, etc. Accordingly, in a case where these lubricants are added to the engineering plastics or supper engineering plastics whose molding temperature reaches up to as high as 180 - 350°C, lubricants in these resins tend to be thermally decomposed. So lubrication property, flow property, mold releasability, etc. of such lubricants are deteriorated, and productivity tend to be lowered due to smoking, coloration and mold fouling originating from the thermal decomposition of the lubricants.

In Japanese Patent Publication H03-153793A, a single wax having a higher softening point of 250°C or over, which is produced by a chemical reaction between a higher aliphatic monocarboxylic acid, a polybasic acid and a diamine, is used. However, the emission of outgas originating from the decomposition of the wax at the time of production of resin molds, and fouling substances of humps originating from the wax at the time of continuous production of resin molds, which attaches to a lip of a molding die or to the surface of a cooling role, are observed. The generation of the outgas and the fouling substances of the humps could cause deterioration of appearance of molded articles and a decrease in the production rate due to removal of the fouling substances. JP-6145686 A discloses resin compositions comprising polyamide wax for molding processing.

The present invention was made to solve the aforementioned problems and an object of the present invention is to provide a resin comprising a wax and a method for manufacturing the same. The wax is added to thermoplastic resins which has high molding temperature at which a composition including the thermoplastic resins is molded and processed. The wax is not degraded by heat and prevents mold fouling. The wax also gives lubricating properties and mold releasability to the composition including the thermoplastic resins. Another object of the present invention is to provide a thermoplastic resin composition excellent in productivity. Still another object of the present invention is to use the wax a a lubricant for thermoplastic resin molding processes. and also to use the wax as a mold release agent for thermoplastic resin molding processes.

In a first embodiment, the object of the present invention is solved by a resin composition for molding process comprising 100 parts by weight of a thermoplastic resin and 0.02 - 5 parts by weight of a wax. Said wax is characterized in that the wax comprises:
99.98 - 95% by weight of an amide wax component which is obtained through dehydration condensation between an acids which comprises, 2 moles in molar ratio of a saturated aliphatic monocarboxylic acids having a carbon number of 12 - 22 and "a" mole of a polybasic acids having a carbon number of 2 - 14; "a" is defined by 0 ≤ "a" ≤ 5 in molar ratio, and "b" mole of a diamines having a carbon number of 2 - 14; "b" is defined by 1 ≤ "b" ≤ 6 in molar ratio and the total number of carboxylic groups is adjusted to be equal to the total number of amino groups and
0.02 - 5% by weight of an oxidation inhibitor which is compatibly dissolved in the amide wax component, the oxidation inhibitor is a phosphite base oxidation inhibitor, and the purity of the saturated aliphatic monocarboxylic acid is at least 60% by weight.

In the wax the saturated aliphatic monocarboxylic acids is preferably a high purity saturated aliphatic monocarboxylic acids having a purity of at least 97%.

In the wax the saturated aliphatic monocarboxylic acids has preferably a carbon number of 18 and is a high purity non-substituted saturated aliphatic monocarboxylic acids or mono- or di-hydroxy group-substituted saturated aliphatic monocarboxylic acids having a purity of at least 97%.

Preferably, the amide wax component comprises ethylene-bis-stearylamide.

In an alternative embodiment, the problem of the present invention is solved by a method for manufacturing a resin composition for molding process comprising 100 parts by weight of a thermoplastic resin and 0.02 - 5 parts by weight of a wax comprising 99.98 - 95% by weight of an amide wax component and a total amount of 0.02 - 5% by weight of an oxidation inhibitor which is compatibly dissolved and contained in the amide wax component, comprises steps of:
synthesizing the amide wax component through dehydration condensation between an acids comprising 2 moles in molar ratio of a saturated aliphatic monocarboxylic acids having a carbon number of 12 - 22 and "a" mole in molar ratio of polybasic acid having a carbon number of 2 - 12; "a" is defined by 0 ≤ "a" ≤ 5, and "b" mole in molar ratio of a diamines having a carbon number of 2 - 12;"b" is defined by 1≤ "b" ≤ 6 and the total number of carboxylic groups is adjusted to be equal to the total number of amino groups
adding the oxidation inhibitor, which is a phosphite base oxidation inhibitor, into the amide wax component so as to contain it therein so as to obtain a wax, and
adding the wax into the thermoplastic resin so as to obtain the resin composition, and the purity of the saturated aliphatic monocarboxylic acid is at least 60% by weight.

In the method for manufacturing resin composition for molding process, the oxidation inhibitor is preferably added into the acids and the diamines previously, and after that the amide wax component is synthesized so as to obtain the amide wax component that contains the oxidation inhibitor.

In a preferred embodiment of the method for manufacturing resin composition for molding process, before thus synthesizing, 0.01 - 1% by weight of the oxidation inhibitor is added into the acids and the diamines, and after thus synthesizing, 0.01 - 4.99% by weight of the oxidation inhibitor is added so as to obtain the wax that contains the total amount of 0.02 - 5% by weight of the oxidation inhibitor.

In an alternative embodiment, the problem of the present invention is solved by the use of the wax component described above as a lubricant for thermoplastic resin molding processes.

In an alternative embodiment, the problem of the present invention is solved by the use of the wax component described above as a mold release agent for thermoplastic resin molding processes.

The wax when mixed with an oxidation inhibitor, shows an excellent heat resistance. Oxidation and decomposition of the amide wax component, ethylene bis stearylamide (EBS) that is a low melting point component in the amide wax component, and a small amount of un-reacted carboxylic acids and amines, are prevented. Further, the oxidation inhibitor in this wax prevents the coloration of the amide wax component. When this wax is mixed with a thermoplastic resin to produce a molding resin composition used for molding, coloration of the thermoplastic resin can be prevented.

In particular, the color tone of this wax itself becomes close to white if high purity saturated aliphatic monocarboxylic acids is used as the amide wax component. Therefore, when such wax is used in wax-containing secondary products such as lubricants or mold release agents for thermoplastic resin molding processes, etc. or resin compositions for molding processes, color tone of such secondary products is not influenced by the wax. Accordingly, the wax can be used for molded products having various color tones.

The wax expresses excellent surface orientation properties. Therefore, when the wax is added to thermoplastic resins, melt viscosity of the resin composition for molding process including the thermoplastic resin is lowered, and lubricating property, flow property and heat resistance of the resin composition can be improved.

In cases where the wax is added into thermoplastic resins that are to be molded at a high temperature and further the composition containing thus thermoplastic resins therewith is used for molding process, the wax does not show thermal decomposition, showing excellent heat resistance. The wax also prevents mold fouling. The wax gives excellent lubricating property and excellent mold releasing property to the lubricants and mold release agents including the wax for thermoplastic resin molding processes. Further, at the time of resin molding process, no outgas originating from the decomposition of the wax and no fouling substance of the humps derived from the wax is observed on a mold lip or on a cooling roll during continuous production of resin molding process. Therefore, there is no damage in the appearance of the molded articles and is no need of troublesome work such as removal of the fouling substances. Productivity can be improved. Possible pollution around the produced molded articles arising from falling of the decomposed substance from the molded articles during usage, can be prevented.

According to the method for manufacturing the wax a high quality wax can be produced homogeneously, easily and efficiently.

The resin composition for molding process of the present invention contains the wax excellent in heat resistance, so that the resin composition does not cause smoking and coloration due to thermal decomposition when molded. Further it is possible to improve mold releasability from molds and to prevent formation of fouling arising on a mold lip, on a cooling roll or on molds during continuous production. It is possible to improve a continuous productivity which has been lowered due to a mold fouling, and to improve productivity in molding processes of the resin composition for molding process.

Preferred embodiment of the present invention will be precisely described below, but the scope of the present invention should not be limited to these embodiments.

The wax can be prepared, for example, as follows.

The mixture of 2 molar equivalents of a saturated aliphatic monocarboxylic acids having a carbon number of 12 - 22, 2 molar equivalents of aliphatic dicarboxylic acid as a polybasic acids having a carbon number of 2 - 12, 3 molar equivalents of aliphatic diamine as a diamines having a carbon number of 2 - 14, and 0.01 - 1% by weight of phosphite-base oxidation inhibitor, is heated at 160 - 300°C for 2 - 10 hours to carry out a solvent-free dehydration condensation. The aliphatic diamine is dehydration-condensed with the aliphatic monocarboxylic acid and the aliphatic dicarboxylic acid. An amide compound is produced thereby. Thus a wax comprising this amide compound and the phosphite-base oxidation inhibitor is obtained. Further, 0.01 - 4.49% by weight of the phosphite-base oxidation inhibitor is added and mixed, a wax, which is a target wax, can be obtained. The thus obtained wax is a solid and has a color of from light yellow to medium brown. Its melting point is 130 - 280°C. The acid value and amine value thereof are equal to or lower than 20.

As the saturated aliphatic monocarboxylic acids, un-substituted saturated aliphatic monocarboxylic acids such as lauric acid, myristic acid, pentadecyl acid, palmitic acid, margaric acid, stearic acid, nonadecane acid, arachidic acid, behenic acid, etc., can be exemplified. Hydroxy group-containing aliphatic monocarboxylic acids may be for example hydroxy group-substituted aliphatic monocarboxylic acids which can be derived from the un-substituted saturated aliphatic monocarboxylic acids through mono- or di-hydroxy group substitution. As the hydroxy group-containing aliphatic monocarboxylic acids, 12-hydroxy stearic acid, dihydroxy stearic acid can be exemplified. The saturated aliphatic monocarboxylic acids such as these un-substituted saturated aliphatic monocarboxylic acids and hydroxy group-containing aliphatic monocarboxylic acids is preferably used solely in light of the heat resistance of the wax. However, it is difficult to purchase the wax having a purity of 100%. A long and a short saturated aliphatic monocarboxylic acids tend to get mixed in due to a raw material obtained and due to an industrial productivity. Accordingly, 2 or more kinds of the saturated aliphatic monocarboxylic acids may be blended as long as the feature of the present invention is not marred. For example, the aliphatic monocarboxylic acids mixture comprises: 95% by weight or over of a main component; and a total amount of less than 5% by weight of accessory components, preferably 97% by weight or over of the main component and the total amount of less than 3% by weight of the accessory components.

Above all, concerning the saturated aliphatic monocarboxylic acids, its purity is preferably 97% or over, and the saturated aliphatic monocarboxylic acids is preferably a stearic acids having a carbon number of 18. If the saturated aliphatic monocarboxylic acids has such high purity, the whiteness of the wax is improved and accordingly the wax can be used more widely and its heat resistance property is critically improved enormously. On the other hand, the purity is as low as approximately 60% of an industrial use level, the wax has a color tone of from yellow to light brown. Application field of it can be extremely limited and its heat resistance is also lowered. In particular, in a case where the purity is 97% or over and in a case where un-substituted stearic acid, monohydroxy stearic acid or dihydroxy stearic acid is used, their heat resistance property is improved. The SP value (it is a solubility parameter and is defined by δ =(ΔH/V)^{1/2}, here, ΔH: molar heat of vaporization of a liquid, V: molar volume) is decreased with increase in the purity of these stearic acids. Compatibility between the wax and the oxidation inhibitor is improved, so that separation between the two components becomes difficult. As a result, on a surface of the composition comprising the wax and the resin, stearic acid tends to be oriented. In addition, saturated aliphatic monocarboxylic acids, such as example, stearic acid, is mainly produced from natural products, accordingly low molecular weight impurity components often tends to be contained. When the low molecular weight impurity component-containing stearic acid is used, this heat resistance property of the resin composition which contains this wax is extremely lowered due to the presence of the low molecular weight impurity component. In addition, generation of outgas may be induced after melt molding. However, if a high purity stearic acid, which especially has the purity of 97% or over, is used, the heat resistance of the resin composition which contains this wax is fairly improved. The SP value of the oxidation inhibitor tends to be lower than this wax. When the SP value of a wax is lowered, compatibility with the oxidation inhibitor is improved, accordingly, when stearic acids having a purity of 97% or over is used, distinguished effects can be observed.

As polybasic acids, a di- or more basic acid is preferably used. An aliphatic dicarboxylic acid is more preferably used. As the aliphatic dicarboxylic acid, oxalic acid, malonic acid, succinic acid, glutaric acid, adipic acid, pimelic acid, azelaic acid, sebacic acid, 1, 10 - decanedicarboxylic acid, 1, 12 -dodecane dicarboxylic acid, etc. can be exemplified. As a dicarboxylic acid, an aromatic dicarboxylic acid such as phthalic acid, terephthalic acid, etc. are exemplified. As an alicyclic dicarboxylic acid, cyclohexane dicarboxylic acid, cyclohexyl succinic acid, etc. can be exemplified. Such polybasic acids can be used alone or in combination of two or more. High purity polybasic acids can be more easily available at low cost under stable market when compared to the saturated aliphatic monocarboxylic acid. For example, the polybasic acids having purity of 97% or over, or an ordinary purity of 99% or over, can be used. Those having a purity of 99.5% or over, which is approximately a single component, can be preferably used.

As a diamines, ethylene diamine, 1, 3-propane diamine, 1, 4-butane diamine, hexamethylene diamine, metaxylene diamine, tolylene diamine, paraxylene diamine, phenylene diamine, isophorone diamine 1, 10-decane diamine, 1, 12-dodecane diamine, 4, 4-diaminodicyclohexyl methane, 4, 4-diaminodiphenyl methane, etc. can be exemplified. Such diamines can be used alone or in combination of 2 or more.

As long as the original property of the wax is not impaired, an aromatic monocarboxylic acid, dicarboxylic acid and diamine component may be contained.

The amount of diamines used is adjusted according to 2 mole of aliphatic monocarboxylic acid and a mole number of aliphatic dicarboxylic acid so that the total number of carboxylic group is adjusted to be equal to the total number of amino group. For example, when 2 moles of the aliphatic monocarboxylic acid and n moles of the aliphatic dicarboxylic acid (n = 0 - 5) are used, (n + 1) moles of the diamine should be used to adjust the equivalent mole number of acid and amine. In other words, when an acids comprises 2 moles of saturated aliphatic monocarboxylic acids having a carbon number of 12 - 22 and "a" ("a" is defined by 0 ≤ "a" ≤ 5) moles of polybasic acids is used, "b" ("b": 1 ≤ "b" ≤ 6) moles of diamines having a carbon number of 2 - 14 is added into the amine to synthesize an amide wax through dehydration condensation reaction. On this occasion, the ratio of "a" and "b" moles may be adjusted arbitrarily.

This wax may be a single compound. Ordinary, the wax is obtained as a mixture of different molecular weight compounds. The wax is preferably represented by a following chemical formula A-C-(B-C)ₘ - A

(in the formula: A is a dehydroxylation residue of the saturated aliphatic monocarboxylic acid, B is a dehydroxylation residue of the polybasic acid, C is a dehydrogenation residue of the diamine, m = 0 - 20).

The oxidation inhibitor used in the present invention should have good compatibility with the amide wax component. The reason is that this oxidation inhibitor is not used to improve a heat stability of the thermoplastic resin, but is used to improve a heat stability of the amide wax component. If separation occurs, the purpose of the oxidation inhibitor cannot be achieved. Further, the oxidation inhibitor should not extremely impair the physical properties and the processing stability of the thermal plastic resin. As the oxidation inhibitor, a phosphite base oxidation inhibitor is employed

The phosphite base oxidation inhibitors such as tris(nonyl phenyl) phosphite, tris(mixed, mono and dinonyl phenyl) phosphite, distearylpentaerythritol diphosphite or cyclic neopentane tetrayl bis(octadecylphosphite), 4, 4' -isopropylidene diphenol alkyl (C12-C15) phosphite, tris(2, 4 -di-t-butylphenyl) phosphite, 4, 4' -butylidene -bis(3-methyl -6-t- butylphenyl -di- tridecyl phosphite), a mixture of 1, 1, 3 -tris(2-methyl-4-di-tridecyl phosphite -5-t- butyl-phenyl) butane and diphenyl phosphite, 4, 4' -biphenylenediphosphiric acid tetrakis(2, 4 -di-t-butylphenyl) ester, cyclic neopentane tetrayl bis(2, 4 -di-t-butylphenylphosphite), tris(cyclohexylphenyl) phosphite, 2-t-butyl -α- (3-t-butyl -4-hydroxyphenyl) -P-cumenylbis (P-nonylphenyl) phosphite, tris-[2-(2, 4, 8, 10-tetrabutyl-5, 7-dioxa -6-phospho-dibenzo-{a, c} cyclo heptene -6-yl-(oxy)ethyl] amine, bis-[2-methyl-4, 6 -bis-(1, 1 - dimethylethyl) phenyl] ethylphosphite, 3, 9 -bis{2, 4 -bis(1-methyl -1-phenylethyl) phenoxy} -2, 4, 8, 10 -tetraoxa -3, 9-diphosphaspiro [5, 5] undecane, 6-[3-(3-t-butyl-4-hydroxy-5-methylphenyl) propoxy -2, 4, 8, 10-tetra-t-butylbenze [d, f] [1, 3, 2] dioxaphosphepin, 9, 10-dihydro-9-oxa-10- phospha phenanthrene -10-oxide, biphenyl-containing 4, 6-di-t-butyl-m-cresol phosphite condensation product produced by condensation of 4, 6 -di-t-butyl-m-cresol and Friedel-Crafts adduct from phosphorus trichloride and biphenyl, 3, 9 -bis(2, 6 -di-t-butyl -4-methylphenoxy) -2, 4, 8, 10 -tetraoxa -3, 9 -diphosphaspiro [5, 5] undecane, 2, 4, 8, 10 -tetrakis (1, 1 -dimethylethyl) -6-(2-ethylhexyloxy) - 12H- dibenzo [d, g] [1, 3, 2] dioxaphosphocin, carbethoxymethyldiethylphosphonate, etc. can be exemplified.

In particular, as the oxidation inhibitors excellent in compatibility with amide wax component, phosphite-base oxidation inhibitors are used, more preferably, following agents can be used such as, tris(mixed, mono or dinonyl phenyl) phosphite, distearyl pentaerythritol diphosphite, tris(2, 4 -di-t-butylphenyl) phosphite, 3, 9 - bis{2, 4 -bis(1-methyl -1- phenylethyl) phenoxy} -2, 4, 8, 10-tetraoxa -3, 9 - diphosphaspiro [5, 5] undecane, 6-[3-(3-t-butyl-4-hydroxy-5-methylphenyl) propoxy -2, 4, 8, 10 -tetra-t-butylbenz [d, f] [1, 3, 2] dioxaphosphepin, 3, 9 -bis(2, 6 -di-t-butyl-4-methylphenoxy) -2, 4, 8, 10 - tetraoxa -3, 9 -diphosphaspiro [5, 5] undecane.

After the synthesis of the amide wax component, 0.02 - 5% by weight of the oxidation inhibitor can be added to and mixed with 99.98 - 95% by weight of the amide wax component. However, the oxidation inhibitor can be added before the synthesis, or can be added, separately, both before and after the synthesis of the amide wax component. For example, the oxidation inhibitor may be added to the acids and diamines, then the synthesis of the amide wax component is carried out to obtain the amide wax component that contains the total amount of 0.02 - 5% by weight of the oxidation inhibitor that is compatibly dissolved in the amide wax component. Alternatively, before the synthesis of the amide wax component, 0.01 - 1% by weight of the oxidation inhibitor can be added to the acids and diamines then the synthesis reaction is carried out. After the synthesis, 0.01 - 4.99 % by weight of oxidation inhibitor may be further added to the obtained amide wax component. On this occasion, the total amount of the oxidation inhibitor compatibly dissolved in the 99.98 - 95% by weight of the amide wax component is preferably in the range of 0.02 - 5% by weight.

An oxidation inhibitor is added to and mixed with diamines and an acids comprising a saturated aliphatic carboxylic acids and polybasic acids before the synthesis of the amide wax component. Therefore, decomposition of the amide wax component at the time of synthesis can be prevented by the presence of the oxidation inhibitor. Coloration of the amide wax component can also be prevented, and accordingly, when this wax is added to a thermoplastic resin, coloration of the thermoplastic resin composition can be also prevented. On the other hand, after the synthesis of the amide wax component, the oxidation inhibitor may be added. Accordingly, the oxidation inhibitor exhibits an effect as an anti-decomposition agent for the wax when the wax is added to the thermoplastic resin. Conventionally, oxidation inhibitors was added to a thermoplastic resin to prevent the oxidation of the thermoplastic resin, not to prevent a decomposition of additives that exist together with the thermoplastic resin.

The resin composition for molding process of the present invention comprises: 0.02 - 5 parts by weight of the wax; and 100 parts by weight of a resin especially a thermoplastic resin.

The thermoplastic resin into which the wax is mixed has a lower or higher molding temperature. In this regard there are no specific limitations. As the thermoplastic resin, for example, polyolefin resin, polycarbonate resin, polyamide resin, polyester resin, polyacetal resin, modified polyphenylene ether resin, glassfiber-reinforced polyethylene terephthalate resin, super-high-molecular polyethylene resin, liquid polymer resin, polyphenylene sulfide resin, amorphous polyarylate resin, polyethersulfone resin, polyether ketone resin, polythioether ketone resin, polyether ether ketone resin, polysulfone resin, polyarylsulfone resin, polyimide resin, polyamideimide resin, polyetherimide resin, polybenzimidazole resin, polymethylpentene resin, polycyclohexylene-dimethylene-terephthalate resin, syndiotactic polystyrene resin, polyphenylene oxide resin, styrene base resin, polymethacryl resin, polytetrafluoroethylene resin, polyketone resin, thermoplastic elastomer, etc. can be exemplified. These resins can be used alone or as a polymer alloy which can be made in combination of 2 or more of these resins.

More specifically, as a polyolefin resin, polypropylene, polyethylene, etc. can be exemplified. As a polyamide resin, nylon 6, nylon 66, nylon 11, nylon 12, nylon 46, nylon 6T, nylon 61, nylon 9T, nylon M5T, nylon MXD6, nylon 610, nylon 612, (nylon: a registered Trade. Mark) etc. can be exemplified. An aromatic base polyamide can also be used. As a polyester resin, polyacrylate, polyethylene terephthalate, polymethylene naphthalate, polybutylene terephthalate, polyethylene naphthalate, polybutylene naphthalate, etc. can be exemplified. Aromatic polyester may also be used. As a polyphenylene oxide resin, 2, 6-dimethylphenol polymer, 2, 6-diphenyl phenol polymer, and a grafted polymer in which a styrene base resin or other resin is grafted on these polymers. As a styrene base resin, polystyrene, MS resin (methacrylic acid methyl ester-styrene copolymer), AAS resin (acrylonitrile-acrylate-styrene copolymer), AES resin (acrylonitrile-ethylene-propylene rubber reinforcing styrene copolymer), AS resin (acrylonitrile-styrene copolymer), ABS resin (acrylonitrile-butadienestyrene copolymer), etc. can be exemplified. ABS resin means to incorporate a heat resistance ABS resins such as α-methyl-modified ABS resin and N-phenylmaleimide-modified ABS resin. As a thermoplastic elastomer, for example, styrene base elastomer such as styreneisoprene copolymer, styrene-butadiene copolymer, etc.; polyolefin base elastomer, polyvinyl chloride base elastomer, polyurethane base elastomer, polyester base elastomer, polyamide base elastomer, etc, can be exemplified.

The lubricant for thermoplastic resin molding process and the release agent for thermoplastic resin molding process of the present invention each contains the wax. The wax may comprise one kind of compound or two or more kinds of compounds.

It is expected that when inorganic or organic filler is kneaded into a resin having a high melting viscosity, the lubricant that is added can reduce the apparent melting viscosity, so that the dispersibility of the filler in the resin can be improved.

### Examples

Preparations of the wax will be described in Examples 1a to 4b, preparation of wax which are outside the scope of the present invention will be described in Comparative Examples 1a to 4b.

### (Example 1a)

In a reaction apparatus fitted with a stirrer, thermometer, and water separator, 568.0 parts by weight of low purity stearic acid (an aliphatic monocarboxylic acid, purity: approximately 60%), 60 parts by weight of ethylenediamine (a diamine), and 1.9 parts by weight of tris(2, 4 -di-t-butylphenyl) phosphite (an oxidation inhibitor) were added. The reaction mixture was heated to make the mixture perform a condensation reaction (an amidation reaction) under nitrogen atmosphere, at 160 -190°C for 3 - 5 hours with removal of water. An amide wax having an acid value of 6.5 and an amine value of 5.7 was obtained. To the amide wax, 1.9 parts by weight of tris(2, 4-di-t-butyl phenyl) phosphite (an oxidation inhibitor) was added. After melting of the oxidation inhibitor into the amide wax was confirmed, the reaction mixture was cooled down to a room temperature. A wax, a product, was obtained.

### (Example 1b)

In a reaction apparatus fitted with a stirrer, thermometer, and water separator, 568.0 parts by weight of high purity stearic acid (an aliphatic monocarboxylic acid, purity: 98%), 60 parts by weight of ethylenediamine (a diamine), and 1.9 parts by weight of tris(2, 4-di-t-butylphenyl phosphite) (an oxidation inhibitor) were added. The reaction mixture was heated to make the mixture perform a condensation reaction (an amidation reaction) under nitrogen atmosphere, at 160 - 190°C for 3 - 5 hours with removal of water. An amide wax having an acid value of 6.6 and an amine value of 5.9 was obtained. To the amide wax, 1.9 parts by weight of tris(2, 4 -di-t-butyl phenyl) phosphite (an oxidation inhibitor) was added. After melting of the oxidation inhibitor into the amide wax was confirmed, the reaction mixture was cooled down to a room temperature. A wax, a product, was obtained.

### (Example 2a)

In a reaction apparatus fitted with a stirrer, thermometer, and water separator, 568.0 parts by weight of stearic acid (an aliphatic monocarboxylic acid, purity: approximately 60%), 404.0 parts by weight of sebacic acid (a poly basic acid), 180 parts by weight of ethylenediamine (a diamine), and 3.5 parts by weight of 3, 9 - bis(2, 6-di-t-butyl-4-methylphenoxy) - 2, 4, 8, 10 -tetraoxa - 3, 9 -diphosphaspiro [5, 5] undecane, were added. The reaction mixture was heated to make the mixture perform a condensation reaction (an amidation reaction) under nitrogen atmosphere, at 220 - 280°C for 3 - 5 hours with removal of water. An amide wax having an acid value of 7.5 and an amine value of 4.8 was obtained. To the amide wax, 3.5 parts by weight of 3, 9 -bis(2, 6 -di-t-butyl-4-methylphenoxy) -2, 4, 8, 10 -tetraoxa - 3, 9 -diphosphaspiro [5, 5] undecane (an oxidation inhibitor) was added. After melting of the oxidation inhibitor into the amide wax was confirmed, the reaction mixture was cooled down to a room temperature. A wax, a product, was obtained.

### (Example 2b)

In a reaction apparatus fitted with a stirrer, thermometer and water separator, 568.0 parts by weight of high purity stearic acid (an aliphatic monocarboxylic acid, purity: 98%), 404.0 parts by weight of sebacic acid, 180 parts by weight of ethylene diamine (a diamine), 3.5 parts by weight of 3, 9 -bis(2, 6 -di-t-butyl-4-methylphenoxy) -2, 4, 8, 10 -tetraoxa - 3, 9 -diphosphaspiro [5, 5] undecane were added. The reaction mixture was heated to make the mixture perform a condensation reaction (an amidation reaction) under nitrogen atmosphere at 220 - 280°C for 3 - 5 hours with removal of water. An amide wax having an acid value of 7.3 and an amine value of 4.5 was obtained. To the amide wax, 3.5 parts by weight of 3, 9 -bis(2, 6 -di-t-butyl-4-methylphenoxy) -2, 4, 8, 10 -tetraoxa -3, 9 -diphosphaspiro [5, 5] undecane (an oxidation inhibitor) was added. After melting of the oxidation inhibitor into the amide wax was confirmed, the reaction mixture was cooled down to a room temperature. A wax, a product, was obtained.

### (Example 3a)

In a reaction apparatus fitted with a stirrer, thermometer and water separator, 568.0 parts by weight of low purity stearic acid (an aliphatic monocarboxylic acid, purity: approximately 60%), 690.0 parts by weight of 1, 10 -decane dicarboxylic acid (a polybasic acid), 464.0 parts by weight of hexamethylene diamine (a diamine), and 5.2 parts by weight of distearyl pentaerythrytol diphosphite (an oxidation inhibitor) were added. The reaction mixture was heated to make the mixture perform a condensation reaction (an amidation reaction) under nitrogen atmosphere, at 220 - 280°C for 3 - 5 hours with removal of water. An amide wax having an acid value of 4.6 and an amine value of 5.2 was obtained. To the amide wax, 5.2 parts by weight of distearyl pentaerythritol diphosphite (an oxidation inhibitor) was added. After melting of the oxidation inhibitor into the amide wax was confirmed, the reaction mixture was cooled down to a room temperature. A wax, a product, was obtained.

### (Example 3b)

In a reaction apparatus fitted with a stirrer, thermometer and water separator, 568.0 parts by weight of high purity stearic acid (an aliphatic monocarboxylic acid, purity: 98%), 690.0 parts by weight of 1, 10 - decane dicarboxylic acid (a polybasic acid), 464.0 parts by weight of hexamethylenediamine (a diamine), and 5.2 parts by weight of distearyl pentaerythritol diphosphite (an oxidation inhibitor) were added. The reaction mixture was heated to make the mixture perform a condensation reaction (an amidation reaction) under nitrogen atomosphere, at 220 - 280°C for 3 - 5 hours with removal of water. An amide wax having an acid value of 4.5 and an amine value of 5.1 was obtained. To this amine wax, 5.2 parts by weight of distearyl pentaerythritol diphosphite (an oxidation inhibitor) was added. After melting of the oxidation inhibitor into the amide wax was confirmed, the reaction mixture was cooled down to a room temperature. A wax, a product, was obtained.

### (Example 4a)

In a reaction apparatus fitted with a stirrer, thermometer, and water separator, 100 parts by weight of wax described in Example 1a and 100 parts by weight of wax described in Example 2a were added, the mixture was heated at 220 - 280°C under nitrogen atmosphere. After confirming that two kinds of wax were melted and mixed with each other, the mixed wax was cooled down to a room temperature. A wax, a product, was obtained.

### (Example 4b)

In a reaction apparatus fitted with a stirrer, thermometer, and water separator, 100 parts by weight of wax described in Example 1b and 100 parts by weight of wax described in Example 2b were added. The mixture was heated at 220 - 280°C, under nitrogen atmosphere. After confirming that two kinds of wax were melted and mixed with each other, the mixed wax was cooled down to a room temperature. A wax, a product, was obtained.

### (Comparative Example 1a)

In a reaction apparatus fitted with a stirrer, thermometer, and water separator, 568.0 parts by weight of stearic acid (an aliphatic monocarboxylic acid, purity: approximately 60%), 60 parts by weight of ethylene diamine (a diamine) were added. The reaction mixture was heated to make the mixture perform a condensation reaction (an amidation reaction) under nitrogen atmosphere at 160 -190°C for 3 - 5 hours with removal of water. An amide wax having an acid value of 5.3 and an amine value of 6.5 was obtained. The amide wax was cooled down to a room temperature. The amide wax, a product, which is outside the scope of the present invention, was obtained.

### (Comparative Example 1b)

In a reaction apparatus fitted with a stirrer, thermometer, and water separator, 568.0 parts by weight of high purity stearic acid (an aliphatic monocarboxylic acid, purity: 98%), 60 parts by weight of ethylene diamine (a diamine) were added. The reaction mixture was heated to make the mixture perform a condensation reaction (an amidation reaction) under nitrogen atmosphere at 160 - 190°C for 3 - 5 hours with removal of water. An amide wax having an acid value of 5.4 and an amine value of 6.7 was cooled down to a room temperature. A wax, a product, which is outside the scope of the present invention, was obtained.

### (Comparative Example 2a)

In a reaction apparatus fitted with a stirrer, thermometer, and water separator, 568.0 parts by weight of stearic acid (an aliphatic monocarboxylic acid, purity: approximately 60%), 404.0 parts by weight of sebacic acid (a polybasic acid) and 180 parts by weight of ethylene diamine (a diamine) were added. The reaction mixture was heated to make the mixture perform a condensation reaction (an amidation reaction) under nitrogen atmosphere, at 220 - 280°C for 3 - 5 hours with removal of water. An amide wax having an acid value of 7.2 and an amine value of 5.5 was cooled down to a room temperature. A wax, a product, which is outside the scope of the present invention, was obtained.

### (Comparative Example 2b)

In a reaction apparatus fitted with a stirrer, thermometer, and a water separator, 568.0 parts by weight of high purity stearic acid (an aliphatic monocarboxylic acid, purity: 98%), 404.0 parts by weight of sebacic acid (a polybasic acid), and 180 parts by weight of ethylene diamine (a diamine) were added. The reaction mixture was heated to make the mixture perform a condensation reaction (an amidation reaction) under nitrogen atmosphere, at 220 - 280°C for 3 - 5 hours with removal of water. An amide wax having an acid value of 7.1 and an amine value of 5.3 was cooled down to a room temperature. A wax, a product, which is outside the scope of the present invention, was obtained.

### (Comparative Example 3a)

In a reaction apparatus fitted with a stirrer, thermometer, and water separator, 568.0 parts by weight of stearic acid (an aliphatic monocarboxylic acid, purity: approximately 60%), 690.0 parts by weight of 1, 10 -decane dicarboxylic acid (a polybasic acid) and 464.0 parts by weight of hexamethylene diamine (a diamine) were added. The reaction mixture was heated to make the mixture perform a condensation reaction (an amidation reaction) under nitrogen atmosphere at 220 - 280°C for 3 - 5 hours with removal of water. An amide wax having an acid value of 3.5 and an amine value of 4.6 was cooled down to a room temperature. A wax, a product, which is outside the scope of the present invention, was obtained.

### (Comparative Example 3b)

In a reaction apparatus fitted with a stirrer, thermometer, and water separator, 568.0 parts by weight of high purity stearic acid (an aliphatic monocarboxylic acid, purity: 98%), 690.0 parts by weight of 1, 10 - decane dicarboxylic acid (a polybasic acid), and 464.0 parts by weight of hexamethylenediamine (a diamine) were added. The reaction mixture was heated to make the mixture perform a condensation reaction (an amidation reaction) under nitrogen atmosphere, at 220 - 280°C for 3 - 5 hours with removal of water. An amide wax having an acid value of 3.3 and an amine value of 4.5 was cooled down to a room temperature. A wax, a product, which was outside the scope of the present invention, was obtained.

### (Comparative Example 4a)

In a reaction apparatus fitted with a stirrer, thermometer, and water separator, 100 parts by weight of the wax described in Comparative Example 1a and 100 parts by weight of the wax described in Comparative Example 2a were added. The mixture was heated under nitrogen atmosphere at 220 - 280°C. After confirming that two kinds of wax were melted and mixed with each other, the mixed wax was cooled down to a room temperature. A wax, a product, which was outside the scope of the present invention, was obtained.

### (Comparative Example 4b)

In a reaction apparatus fitted with a stirrer, thermometer, and water separator, 100 parts by weight of the wax described in Comparative Example 1b and 100 parts by weight of the wax described in Comparative Example 2b were added. The mixture was heated under nitrogen atmosphere, at 220 - 280°C. After confirming that two kinds of wax were melted and mixed with each other, the mixed wax was cooled down to a room temperature. A wax, a product, which was outside the scope of the present invention, was obtained.

### (Measurement of Heat Resistance)

A decrease in the sample weight was recorded against a sample temperature (or time) using a high sensitive differential scanning calorimeter (Thermo Plus 2/TG8120, Trade name, produced by Rigaku Corporation). Measurement environment was air and nitrogen, and the rate of temperature increase was set to 5°C/min. In the present measurement, a temperature at which 10 weight percent decrease in the sample weight with respect to its original sample weight was observed was defined as a decomposition temperature. Wax in which oxidation inhibitor was contained (Examples 1a - 4b) was compared with wax in which oxidation inhibitor was not contained but high purity aliphatic monocarboxylic acid was used instead (Comparative Examples 1b, 2b, 3b and 4b). The decomposition temperature (decomp. Temp.) of each Comparative Example was symbolized by "Standard" or "Std." If the decomposition temperature of Example was higher than that of Comparative Example, evaluation of the Example was rated as "excellent". If the decomposition temperature of the Example was a little bit higher than that of the Comparative Example, evaluation of the Example was rated as "good". If the decomposition temperature of the Example was equal or inferior to that of the Comparative Example, evaluation of the Example was rated as "poor".

The results of heat resistance measurement were all shown in Table 1 below.

**Table 1**

| Amide wax | with or without Oxidation Inhibitor | Decomp. Temp. In Nitrogen | | Decomp. Temp. in Air | |
|---|---|---|---|---|---|
| | | Decomp. Temp. (°C) | Evaluation | Decomp. Temp. (°C) | Evaluation |
| Ex. 1a | with | 331 | Excellent | 295 | Excellent |
| Ex. 1b | with | 336 | Excellent | 301 | Excellent |
| Comp.Ex.1a | without | 316 | Std. | 285 | Std. |
| Comp.Ex.1b | without | 322 | Good | 289 | Good |
| Ex. 2a | with | 344 | Excellent | 323 | Excellent |
| Ex. 2b | with | 350 | Excellent | 328 | Excellent |
| Comp.Ex.2a | without | 318 | Std. | 302 | Std. |
| Comp.Ex.2b | without | 328 | Good | 310 | Good |
| Ex. 3a | with | 382 | Excellent | 334 | Excellent |
| Ex. 3b | with | 386 | Excellent | 341 | Excellent |
| Comp.Ex.3a | without | 373 | Std. | 311 | Std. |
| Comp.Ex.3b | without | 376 | Good | 319 | Good |
| Ex. 4a | with | 335 | Excellent | 320 | Excellent |
| Ex. 4b | with | 340 | Excellent | 324 | Excellent |
| Comp.Ex.4a | without | 316 | Std. | 295 | Std. |
| Comp.Ex.4b | without | 323 | Good | 304 | Good |

### (Evaluation of Mold releasability and Mold fouling when wax was added to Polyphenylenesulfide resin)

0.5 parts by weight of each amide wax powder obtained in Examples 1a - 4b and Comparative Examples 1a - 4b was dry-blended with 100 parts by weight of polyphenylenesulfide resin respectively, to obtain a resin composition for molding process. The resin composition was melted and kneaded using a screw type extruder under an extruding condition at 320°C, to be pelletized. The thus obtained pellets were dried and then preparing of 100 shots of test piece each having a 1/8 inch thick were carried out, using an injection molding machine at a cylinder temperature of 320°C and a mold temperature of 130°C. Article's appearance such as deformation, mold releasability from molds and mold fouling were evaluated. Concerning the mold releasability, if appearance of the molded articles and releasability from molds are good, it was rated as "excellent". If one or more shots had an unsmooth appearance or unsmooth mold releasability, it was rated as "poor". Concerning mold fouling, if no white powder or cloud was observed, it was rated as "excellent". If there was powder or cloud having a size of 0 - 0.01cm², it was rated as "good". If white powder or cloud having a size of 0.01cm² or over was observed, it was rated as "poor".

### (Test for Melt flow rate using Polyphenylenesuflide resin)

The "melt flow rate" is a general index representing a flow property of a resin that is in a liquid state. The amount of flow from a nozzle (or orifice) having a specified dimension at a specified temperature and pressure, was measured and expressed by a unit of g/10min. 0.5 parts by weight of each amide wax powder obtained in Examples and Comparative Examples was dry-blended with 100 parts by weight of polyphenylenesulfide resin respectively, and the mixture was melt-kneaded using a screw type extruder under an extruding condition at 320°C, to be pelletized. The thus obtained pellets were dried, and then the melt flow rate was measured using a meltindexer at a temperature of 320°C, under measuring conditions of holding (or staying) time of 5min., preliminary loading of 325g and measuring load of 2160g (orifice diameter: 2.095mm, length: 8.00mm). The melt flow rate of the simple substance of polyphenylenesulfide resin was measured under the same conditions, and the obtained value was symbolized as "Standard" or "Std." If each measured value for Examples and Comparative Examples was higher than the standard value by more than 10% or over, it was rated as "excellent". If it was roughly equal to or lower than the standard value, it was rated as "poor".

### (Evaluation of Mold releasability and Mold fouling when wax was added to Polyphenylene ether resin)

0.5 parts by weight of each amide wax powder obtained in Examples 1a - 4b and Comparative Examples 1a - 4b was dry-blended with 100 parts by weight of polyphenylene ether resin respectively, to obtain resin compositions for molding process. And then the resin composition was melted and kneaded using a screw type extruder under an extruding condition at 300°C, to be pelletized. The thus obtained pellets were dried and then preparing of 100 shots of test piece each having a 1/8 inch thick were carried out, using an injection molding machine at a cylinder temperature of 300°C and a mold temperature of 90°C. Article's appearance such as deformation, mold releasability from molds and mold fouling were evaluated. Concerning the mold releasability, if appearance of the molded articles and releasability from molds were good it was rated as "excellent". If one or more shots had an unsmooth appearance or unsmooth releasability from the mold, it was rated as "poor". Concerning the mold fouling, if no white powder or cloud was observed, it was rated as "excellent". If there was powder or cloud in the size of 0 - 0.01cm², it was rated as "good". If white powder or cloud having a size of 0.01cm² or over was observed, it was rated as "poor".

### (Test for Melt flow rate using Polyphenylene ether resin)

0.5 parts by weight of each amide wax powder obtained in Examples and Comparative Examples was dry blended with 100 parts by weight of polyphenylene ether resin respectively, and then they were melted and kneaded, to be pelletized using a screw-type extruder under an extruding condition at a temperature of 300°C. The thus obtained pellets were dried and then the melt flow rate was measured using a meltindexer at a temperature of 300°C, under holding (or staying) time of 5 minutes, preliminary load of 325g, measuring load of 2160g (orifice diameter: 2.095mm, length: 8.00mm). The melt flow rate of the simple substance of polyphenylene ether resin was measured under the same conditions, and the obtained value was symbolized by "standard value" or "Std." If the measured value was higher than the standard value by more than 10% or over, it was rated as "excellent". If the value was roughly equal to or lower than the standard value, it was rated as "poor".

### (Evaluation of Mold releasability and Mold fouling when added to nylon 66 resin)

0.5 parts by weight of each amide wax powder obtained in Examples 1a - 4b and Comparative Examples 1a - 4b was dry blended with 100 parts by weight of nylon 66 resin respectively, to obtain resin compositions for molding process. The resin compositions were melted and kneaded using a screw type extruder under an extruding condition at a temperature of 290°C, to be pelletized. The thus obtained pellets were dried and then preparing of 100 shots of test piece each having a 1/8 inch thick were carried out using an injection molding machine at a cylinder temperature of 290°C, mold temperature of 80°C. Article's appearance such as deformation, mold releasability and mold fouling were evaluated. Concerning the mold releasability, if appearance of the molded articles and releasability from molds were good, it was rated as "excellent". If one or more shots had a poor appearance or poor mold releasability, it was rated as "poor". Concerning mold fouling, if no white powder or cloud was observed, it was rated as "excellent". If there was powder or cloud in the size of 0 - 0.01cm², it was rated as "good". If white powder or cloud having a size of 0.01cm² or over was observed, it was rated as "poor".

### (Test for Melt flow rate using nylon 66 resin)

0.5 parts by weight of each amide wax powder obtained in Examples and Comparative Examples was dry blended with 100 parts by weight nylon 66 resin, and then they were melted and kneaded to be pelletized using a screw-type extruder under an extruding condition at 290°C, to be pelletized. The thus obtained pellets were dried and then the melt flow rate was measured using a meltindexer at a temperature of 290°C, under a holding (or staying) time of 5min., a preliminary load of 325g, a measuring load of 2160g (orifice diameter: 2.095mm, length: 8.00mm). The melt flow rate of a single substance of nylon 66 resin was measured under the same conditions and the obtained value was symbolized as "standard value" or "Std." If the measured value was higher than the standard value by more than 10% or over, it was rated as "excellent". If the value was roughly equal to or lower than the standard value, it was rated as "poor".

The results obtained were classified, according to the type of resins, into Tables 2, 3 and 4 respectively.

**Table 2**

| Amide Wax and Resin | with or without Oxidatation Inhibitor | Results in the case of Polyphenylenesulfide (PPS) Resin | | |
|---|---|---|---|---|
| | | Mold Releasability | Mold Fouling | Melt Flow Rate |
| Ex.1a | with | Excellent | Excellent | Excellent |
| Ex.1b | with | Excellent | Excellent | Excellent |
| Comp.Ex.1a | without | Poor | Poor | Excellent |
| Comp.Ex.1b | without | Poor | Good | Excellent |
| Ex.2a | with | Excellent | Excellent | Excellent |
| Ex.2b | with | Excellent | Excellent | Excellent |
| Comp.Ex.2a | without | Poor | Poor | Excellent |
| Comp.Ex.2b | without | Poor | Good | Excellent |
| Ex.3a | with | Excellent | Excellent | Excellent |
| Ex.3b | with | Excellent | Excellent | Excellent |
| Comp.Ex.3a | without | Poor | Poor | Excellent |
| Comp.Ex.3b | without | Poor | Good | Excellent |
| Ex.4a | with | Excellent | Excellent | Excellent |
| Ex.4b | with | Excellent | Excellent | Excellent |
| Comp.Ex.4a | without | Poor | Poor | Excellent |
| Comp.Ex.4b | without | Poor | Good | Excellent |
| SimpleSubstanc e of PPS | - | Poor | Excellent | Std. |

**Table 3**

| Amide Wax and Resin | with or without Oxidat. Inhibitor | Results in the case of Polyphenylene Ether (PPE) Resin | | |
|---|---|---|---|---|
| | | Mold Releasability | Mold Fouling | Melt Flow Rate |
| Ex.1 a | with | Excellent | Excellent | Excellent |
| Ex.1b | with | Excellent | Excellent | Excellent |
| Comp.Ex.1a | without | Poor | Poor | Excellent |
| Comp.Ex.1b | without | Poor | Good | Excellent |
| Ex.2a | with | Excellent | Excellent | Excellent |
| Ex.2b | with | Excellent | Excellent | Excellent |
| Comp.Ex.2a | without | Poor | Poor | Excellent |
| Comp.Ex.2b | without | Poor | Good | Excellent |
| Ex.3a | with | Excellent | Excellent | Excellent |
| Ex.3b | with | Excellent | Excellent | Excellent |
| Comp.Ex.3a | without | Poor | Poor | Excellent |
| Comp.Ex.3b | without | Poor | Good | Excellent |
| Ex.4a | with | Excellent | Excellent | Excellent |
| Ex.4b | with | Excellent | Excellent | Excellent |
| Comp.Ex.4a | without | Poor | Poor | Excellent |
| Comp.Ex.4b | without | Poor | Good | Excellent |
| simpleSubstanc e of PPO | - | Poor | Excellent | Std. |

**Table 4**

| Amide Wax and Resin | with or without Oxidation Inhibitor | Results in the case of Nylon 66 resin | | |
|---|---|---|---|---|
| | | Mold Releasability | Mold Fouling | Melt Flow Rate |
| Ex.1a | with | Excellent | Excellent | Excellent |
| Ex.1b | with | Excellent | Excellent | Excellent |
| Comp.Ex.1a | without | Poor | Poor | Excellent |
| Comp.Ex.1b | without | Poor | Good | Excellent |
| Ex.2a | with | Excellent | Excellent | Excellent |
| Ex.2b | with | Excellent | Excellent | Excellent |
| Comp.Ex.2a | without | Poor | Poor | Excellent |
| Comp.Ex.2b | without | Poor | Good | Excellent |
| Ex.3a | with | Excellent | Excellent | Excellent |
| Ex.3b | with | Excellent | Excellent | Excellent |
| Comp.Ex.3a | without | Poor | Poor | Excellent |
| Comp.Ex.3b | without | Poor | Good | Excellent |
| Ex.4a | with | Excellent | Excellent | Excellent |
| Ex.4b | with | Excellent | Excellent | Excellent |
| Comp.Ex.4a | without | Poor | Poor | Excellent |
| Comp.Ex.4b | without | Poor | Good | Excellent |
| SimpleSubstanc e of Nylon 66 | - | Poor | Excellent | Std. |

As is clear from Table 1, the wax in Examples of the present invention had excellent resistance to thermal decomposition when compared to that of Comparative Examples that were outside the scope of the present invention. In particular, the wax that was prepared using a high purity aliphatic monocarboxylic acid had excellent resistance to thermal decomposition. As shown in Tables 2, 3 and 4, the wax in Examples of the present invention had excellent mold releasability and anti-mold fouling in the case of mold injection as well when compared to that of Comparative Examples that were outside the scope of the present invention.

Accordingly, the resin composition for molding process which comprises a thermoplastic resin and a wax described in Examples and added into the thermoplastic resin, does not cause smoking or coloration at the time of molding at high temperature. It does not cause a generation of fouling substances of humps originating from a low melting point material on the lip of a mold at the time of molding. Accordingly, appearance of molded articles is not damaged. Therefore appearance of products using the molded articles is not damaged. There is no need to remove the fouling substances, so that there is no fear of deterioration in productivity.

### INDUSTRIAL APPLICABILITY

The wax is excellent in heat resistance and thermal decomposition resistance, so that the wax can be preferably used as a lubricant and releasing agent for molding process of a thermoplastic resin having a high molding temperature such as engineering plastics, super engineering plastics, as well as a thermoplastic resin having a low molding temperature. It can also be used as dispersant for pigment and filler.

## Claims

1. A resin composition for molding process comprising;
100 parts by weight of a thermoplastic resin and 0.02 - 5 parts by weight of a wax comprising:
99.98 - 95% by weight of an amide wax component which is obtained through dehydration condensation between an acids which comprises, 2 moles in molar ratio of a saturated aliphatic monocarboxylic acids having a carbon number of 12 - 22 and "a" mole of a polybasic acids having a carbon number of 2 - 14; "a" is defined by 0 ≤ "a" ≤ 5 in molar ratio, and "b" mole of a diamines having a carbon number of 2 - 14; "b" is defined by 1 ≤ "b" ≤ 6 in molar ratio and the total number of carboxylic groups is adjusted to be equal to the total number of amino groups and
0.02 - 5% by weight of an oxidation inhibitor which is compatibly dissolved in the amide wax component
the oxidation inhibitor **is** a phosphite base oxidation inhibitor,and
the purity of the saturated aliphatic monocarboxylic acid is at least 60% by weight.

2. The resin composition for molding process according to Claim 1, wherein the saturated aliphatic monocarboxylic acids is a high purity saturated aliphatic monocarboxylic acids having a purity of at least 97% by weight.

3. The resin composition for molding process according to of Claim 1, wherein the saturated aliphatic monocarboxylic acids has a carbon number of 18 and is a high purity non-substituted saturated aliphatic monocarboxylic acids or mono- or di-hydroxy group-substituted saturated aliphatic monocarboxylic acids having a purity of at least 97% by weight.

4. The resin composition for molding process according to Claim 1, wherein the amide wax component comprises ethylene-bis-stearylamide.

5. A method for manufacturing a resin composition for molding process comprising 100 parts by weight of a thermoplastic resin and 0.02 - 5 parts by weight of a wax comprising 99.98 - 95% by weight of an amide wax component and a total amount of 0.02 - 5% by weight of an oxidation inhibitor which is compatibly dissolved and contained in the amide wax component, which comprises steps of:
synthesizing the amide wax component through dehydration condensation between an acids comprising 2 moles in molar ratio of a saturated aliphatic monocarboxylic acids having a carbon number of 12 - 22 and "a" mole in molar ratio of polybasic acid having a carbon number of 2 - 12; "a" is defined by 0 ≤ "a" ≤ 5, and "b" mole in molar ratio of a diamines having a carbon number of 2 - 12;"b" is defined by 1 ≤ "b" ≤ 6 and the total number of carboxylic groups is adjusted to be equal to the total number of amino groups,
adding the oxidation inhibitor, which **is** a phosphite base oxidation inhibitor, into the amide wax component to contain it therein so as to obtain the wax, and
adding the wax into the thermoplastic resin so as to obtain the resin composition, and the purity of the saturated aliphatic monocarboxylic acid is at least 60% by weight.

6. The method for manufacturing resin composition for molding process according to Claim 5, wherein the oxidation inhibitor is added into the acids and the diamines previously, and after that the amide wax component is synthesized so as to obtain the amide wax component that contains the oxidation inhibitor.

7. The method for manufacturing resin composition for molding process according to Claim 6, wherein before thus synthesizing, 0.01 - 1% by weight of the oxidation inhibitor is added into the acids and the diamines, and after thus synthesizing, 0.01 - 4.99% by weight of the oxidation inhibitor is added so as to obtain the wax that contains the total amount of 0.02 - 5% by weight of the oxidation inhibitor.

8. Use of the wax component described in claim 1 as a lubricant for thermoplastic resin molding processes.

9. Use of the wax component described in claim 1 as a mold release agent for thermoplastic resin molding processes.

## Patentansprüche

1. Harzzusammensetzung für Formverfahren, umfassend:
100 Gewichtsteile eines thermoplastischen Harzes und 0,02 bis 5 Gewichtsteile eines Wachses, umfassend:
99,98 bis 95 Gew.-% einer Amidwachskomponente, die durch Dehydratationskondensation zwischen einer Säure, die 2 mol als Stoffmengenverhältnis einer gesättigten aliphatischen Monocarbonsäure mit einer Kohlenstoffzahl von 12 bis 22 und "a" mol einer mehrbasigen Säure mit einer Kohlenstoffzahl von 2 bis 14 umfasst, wobei "a" durch 0 ≤ "a" ≤ 5 als Stoffmengenverhältnis definiert ist, und "b" mol eines Diamins mit einer Kohlenstoffzahl von 2 bis 14 erhalten wird, wobei "b" durch 1 ≤ "b" ≤ 6 als Stoffmengenverhältnis definiert ist und die Gesamtzahl der Carboxygruppen so eingestellt ist, dass sie gleich der Gesamtzahl der Aminogruppen ist; und
0,02 bis 5 Gew.-% eines Oxidationsinhibitors, der in der Amidwachskomponente kompatibel gelöst ist;
wobei der Oxidationsinhibitor ein Oxidationsinhibitor auf Phosphitbasis ist; und
die Reinheit der gesättigten aliphatischen Monocarbonsäure wenigstens 60 Gew.-% beträgt.

2. Harzzusammensetzung für Formverfahren gemäß Anspruch 1, wobei die gesättigte aliphatische Monocarbonsäure eine hochreine gesättigte aliphatische Monocarbonsäure mit einer Reinheit von wenigstens 97 Gew.-% ist.

3. Harzzusammensetzung für Formverfahren gemäß Anspruch 1, wobei die gesättigte aliphatische Monocarbonsäure eine Kohlenstoffzahl von 18 aufweist und eine hochreine unsubstituierte gesättigte aliphatische Monocarbonsäure oder mono- oder dihydroxygruppensubstituierte gesättigte aliphatische Monocarbonsäure mit einer Reinheit von wenigstens 97 Gew.-% ist.

4. Harzzusammensetzung für Formverfahren gemäß Anspruch 1, wobei die Amidwachskomponente Ethylenbis(stearylamid) umfasst.

5. Verfahren zur Herstellung einer Harzzusammensetzung für Formverfahren, die 100 Gewichtsteile eines thermoplastischen Harzes und 0,02 bis 5 Gewichtsteile eines Wachses, das 99,98 bis 95 Gew.-% einer Amidwachskomponente und eine Gesamtmenge von 0,02 bis 5 Gew.-% eines Oxidationsinhibitors, der in der Amidwachskomponente kompatibel gelöst und enthalten ist, umfasst, umfasst, das die folgenden Schritte umfasst:
Synthetisieren der Amidwachskomponente durch Dehydratationskondensation zwischen einer Säure, die 2 mol als Stoffmengenverhältnis einer gesättigten aliphatischen Monocarbonsäure mit einer Kohlenstoffzahl von 12 bis 22 und "a" mol einer mehrbasigen Säure mit einer Kohlenstoffzahl von 2 bis 14 umfasst, wobei "a" durch 0 ≤ "a" ≤ 5 als Stoffmengenverhältnis definiert ist, und "b" mol eines Diamins mit einer Kohlenstoffzahl von 2 bis 14 erhalten wird, wobei "b" durch 1 ≤ "b" ≤ 6 als Stoffmengenverhältnis definiert ist und die Gesamtzahl der Carboxygruppen so eingestellt ist, dass sie gleich der Gesamtzahl der Aminogruppen ist;
Hinzufügen des Oxidationsinhibitors, der ein Oxidationsinhibitor auf Phosphitbasis ist, zu der Amidwachskomponente, so dass er in dieser enthalten ist, wobei man das Wachs erhält; und
Hinzufügen des Wachses zu dem thermoplastischen Harz, wobei man die Harzzusammensetzung erhält; wobei
die Reinheit der gesättigten aliphatischen Monocarbonsäure wenigstens 60 Gew.-% beträgt.

6. Verfahren zur Herstellung einer Harzzusammensetzung für Formverfahren gemäß Anspruch 5, wobei der Oxidationsinhibitor im Voraus zu den Säuren und Diaminen gegeben wird und danach die Amidwachskomponente synthetisiert wird, wobei man die Amidwachskomponente, die den Oxidationsinhibitor enthält, erhält.

7. Verfahren zur Herstellung einer Harzzusammensetzung für Formverfahren gemäß Anspruch 6, wobei vor dem Synthetisieren 0,01 bis 1 Gew.-% des Oxidationsinhibitors zu den Säuren und Diaminen gegeben wird und nach dem Synthetisieren 0,01 bis 4,99 Gew.-% des Oxidationsinhibitors hinzugefügt werden, wobei man ein Wachs erhält, das die Gesamtmenge von 0,02 bis 5 Gew.-% des Oxidationsinhibitors enthält.

8. Verwendung der in Anspruch 1 beschriebenen Wachskomponente als Gleitmittel für Verfahren zum Formen von thermoplastischen Harzen.

9. Verwendung der in Anspruch 1 beschriebenen Wachskomponente als Formentrennmittel für Verfahren zum Formen von thermoplastischen Harzen.

## Revendications

1. Composition de résine pour procédé de moulage, comprenant :
100 parties en poids d'une résine thermoplastique et 0,02 à 5 parties en poids d'une cire, comprenant :
99,98 à 95 % en poids d'un composant cire d'amide obtenu par une condensation par déshydratation entre un acide comprenant 2 mol en rapport molaire d'un acide monocarboxylique aliphatique saturé avec un nombre de carbones de 12 à 22 et "a" mol d'un acide polybasique avec un nombre de carbones de 2 à 14, "a" étant défini par 0 ≤ "a" ≤ 5 en rapport molaire, et "b" mol d'une diamine avec un nombre de carbones de 2 à 14, "b" étant défini par 1 ≤ "b" ≤ 6 en rapport molaire, et le nombre total de groupes carboxyliques est ajusté de façon à être égal au nombre total de groupes amino, et
0,02 à 5 % en poids d'un inhibiteur d'oxydation dissout de manière compatible dans le composant cire d'amide,
ledit inhibiteur d'oxydation est un inhibiteur d'oxydation à base de phosphite, et
la pureté dudit acide monocarboxylique aliphatique saturé est au moins 60 % en poids.

2. Composition de résine pour procédé de moulage selon la revendication 1, dans laquelle ledit acide monocarboxylique aliphatique saturé est un acide monocarboxylique aliphatique saturé de haute pureté, ayant une pureté d'au moins 97 % en poids.

3. Composition de résine pour procédé de moulage selon la revendication 1, dans laquelle ledit acide monocarboxylique aliphatique saturé présente un nombre de carbones de 18 et est un acide monocarboxylique aliphatique saturé non substitué de haute pureté ou un acide monocarboxylique aliphatique saturé mono- ou disubstitué par des groupes hydroxy ayant une pureté d'au moins 97 % en poids.

4. Composition de résine pour procédé de moulage selon la revendication 1, dans laquelle le composant cire d'amide comprend de l'éthylène-bis(stéar-amide).

5. Procédé pour fabriquer une composition de résine pour procédé de moulage comprenant 100 parties en poids d'une résine thermoplastique et 0,02 à 5 parties en poids d'une cire comprenant 99,98 à 95 % en poids d'un composant cire d'amide et une quantité totale de 0,02 à 5 % en poids d'un inhibiteur d'oxydation dissout de manière compatible et contenu dans le composant cire d'amide, comprenant les étapes consistant à :
synthétiser le composant cire d'amide par une condensation par déshydratation entre un acide comprenant 2 mol en rapport molaire d'un acide monocarboxylique aliphatique saturé avec un nombre de carbones de 12 à 22 et "a" mol d'un acide polybasique avec un nombre de carbones de 2 à 14, "a" étant défini par 0 ≤ "a" ≤ 5 en rapport molaire, et "b" mol d'une diamine avec un nombre de carbones de 2 à 14, "b" étant défini par 1 ≤ "b" ≤ 6 en rapport molaire, et le nombre total de groupes carboxyliques est ajusté de façon à être égal au nombre total de groupes amino,
ajouter l'inhibiteur d'oxydation qui est un inhibiteur d'oxydation à base de phosphite au composant cire d'amide pour être contenu là-dedans, pour obtenir la cire, et
ajouter la cire à la résine thermoplastique pour obtenir la composition de résine, où
la pureté dudit acide monocarboxylique aliphatique saturé est au moins 60 % en poids.

6. Procédé pour fabriquer une composition de résine pour procédé de moulage selon la revendication 5, dans lequel ledit inhibiteur d'oxydation est ajouté auxdits acides et auxdites diamines préalablement, et ensuite ledit composant cire d'amide est synthétisé pour obtenir le composant cire d'amide contenant l'inhibiteur d'oxydation.

7. Procédé pour fabriquer une composition de résine pour procédé de moulage selon la revendication 6, dans lequel, avant ladite synthèse, 0,01 à 1 % en poids de l'inhibiteur d'oxydation est ajouté aux acides et aux diamines, et après ladite synthèse, 0,01 à 4,99 % en poids de l'inhibiteur d'oxydation est ajouté pour obtenir la cire qui contient la quantité totale de 0,02 à 5 % en poids de l'inhibiteur d'oxydation.

8. Utilisation du composant cire comme décrit dans la revendication 1 comme lubrifiant pour des procédés de moulage de résines thermoplastiques.

9. Utilisation du composant cire comme décrit dans la revendication 1 comme agent de démoulage pour des procédés de moulage de résines thermoplastiques.
